# EUROPEAN PATENT SPECIFICATION

(11) **EP 1 865 789 B1**
(45) Date of publication and mention of the grant of the patent: **18.09.2013**
(21) Application number: 06726523.1
(22) Date of filing: 24.03.2006
(51) Int. Cl.: A23G 3/54, A23G 3/52, A23G 3/40, A23G 3/44

(54) **EDIBLE FOAMED COMPOSITION**
ESSBARE GESCHÄUMTE ZUSAMMENSETZUNG
COMPOSITION DE MOUSSE COMESTIBLE

(30) Priority: 24.03.2005 GB 0506108
(43) Date of publication of application: 19.12.2007
(73) Proprietor: MARS, INCORPORATED, McLean, VA 22101-3383 (US)
(72) Inventor: WILLIAMSSON, Kristina, K., Slough Berks SL1 4JX (GB); CHARALAMBOUS, Nicos, A., Slough Berks SL1 4JX (GB)
(74) Representative: Taylor, Gillian Claire
(86) International application number: PCT/GB2006/001114
(87) International publication number: WO 2006/100516

(56) References cited:
- EP-A- 1 166 655
- WO-A-02/37979
- WO-A-97/34503
- WO-A-2005/002352
- US-A- 3 325 295
- US-A- 3 701 669
- US-A- 4 418 086
- US-A- 4 482 575
- US-A- 4 601 907
- US-A- 4 707 374
- US-A- 5 154 942
- US-A- 5 925 394
- US-A1- 2003 049 361
- US-A1- 2004 247 761

## Description

The present invention relates to an edible thermostable foamed composition containing fat. It is useful in, for example, the production of confectionery.

### Background of the invention

In the production of human and animal foodstuffs it is known to use edible fats as lubricants to improve the mouth feel of foodstuffs, such as confectionery. Such fats can be introduced in the form of so called cremes, which may or may not contain dairy product, which contain fat at about 25% to 45% and usually flavour and sweetening agents. Hardening of the fat content may set cremes of this type. When eaten by the consumer, the fat melts resulting in the characteristic mouth feel.

Some foodstuffs, such as confectionery products including substantial pieces of set expanded sugar based honeycomb confectionery, benefit from the inclusion of cremes containing fats, as the creme improves the eating characteristics of the honeycomb confectionery. The fats may be dairy or non-dairy or a mixture. However, conventional cremes melt and liquefy immediately they enter the consumer's mouth and may not be available throughout the time over which the consumer is chewing the honeycomb. Further, although it is desirable to have the fat available throughout the chewing of the honeycomb, it is not desirable for the confectionery to have a high fat content or to include fat which does not readily melt in the mouth and so gives a waxy mouthfeel. An example of such a product is disclosed in US-A-4 707 374.

Conventional confectionery foamed cremes rely for their structure on a fat matrix. Fats which melt when eaten may soften or even melt at relatively high ambient temperatures, for example, in a hot climate. Cremes based on such fats will also melt at high ambient temperatures and it may be necessary to use relatively high melting point fats in cremes intended for hot climates; such creams have a less satisfactory mouth feel than cremes containing lower melting point fats.

WO-A-2005002352 discloses an aerated fat based composition including relatively large bubbles (0.5mm to 3mm in diameter). Aeration is achieved by introducing pressurised gas into the liquid fat and whipping the fat.

US-A-4 482 575 discloses an aerated fat based cheese composition comprising protein and hard fat.

### Summary of the invention

According to the invention there is provided a foamed edible composition stable at body temperature (37°C) that liquefies under shear comprising a protein and at least 25% fat, the fat being liquid at body temperature (37°C) and having a solids content at 20°C of no more than 35%, the composition containing no water. Preferably, the fat also has a solids content at 30°C of no more than 7%.

Compositions according to the invention are believed to contain a protein matrix.

Compositions according to the invention remain stable at relatively high temperatures, that is, temperatures as high as human body heat (37°C) or higher. By stable is meant that the composition does not melt and that the fat content of the composition remains in the composition, even though it may be significantly above its melting point.

Fats having a low solids content are preferred by consumers, since they provide a pleasanter mouth feel than harder fats, which require melting in the mouth and consequently have a more waxy texture.

Compositions according to the invention are shear reversible, that is, on being subject to shear, the structure breaks down and the fat is released. When subjected to mechanical shear, for example by chewing, the composition breaks down, the fat is released and the composition reverts to a liquid state. When it liquefies, the foamed composition reverts to an unfoamed or less foamed state and it is the breakdown of the foam which leads to liquefaction, rather than the melting of the fat. These properties of the composition provide a unique eating experience to the consumer. When the consumer initially bites into the composition, the structure of the composition, believed to be provided by a protein matrix, offers some resistance to the bite and the composition is relatively firm. Upon chewing, the composition liquefies and emulsifies in the consumer's mouth, providing a contrasting soft and non-waxy mouth feel.

Preferably, the fat content of the composition is at least 30%, more preferably at least 35%. Preferably, especially for human food products, the fat is a non-hydrogenated fat.

The invention also provides a confectionery product comprising the foamed edible composition of the invention surrounded by rigid edible material. In a preferred embodiment, the rigid edible material is also aerated or otherwise foamed. In a more preferred embodiment, the rigid edible material is coated in chocolate.

The absence of water in the foamed composition according to the first aspect of the invention makes it particularly suitable for combination with dry confectionery products, such as expanded sugar based honeycomb confectionery, biscuit or wafer. Any moisture present in the foamed composition would migrate into the dry confectionery, resulting in spoiling of the product. The use of foamed compositions containing no water retains the crisp and dry texture of the outer shell. When a confectionery product according to the invention is eaten, the breakdown of the foamed composition upon chewing, as described above, releases the liquid fat into the mouth so that it is available as lubrication during the chewing of the rigid material, which is likely to otherwise be dry. The fat is released gradually during chewing as the protein matrix of the foamed composition is broken down so that it can provide lubrication throughout the time over which the consumer is chewing the rigid material.

The invention also provides a method of making a foamed edible composition stable at body temperature and liquefies under shear comprising a protein, a fat liquid at body temperature and containing no water, the method comprising: forming a mixture of a protein and at least 25% fat having a solids content at 20°C of no more than 35%, the mixture containing substantially no water, aerating the mixture and heating the aerated mixture.

Preferably, the heating is carried out under vacuum. This causes the aerated mixture to expand further.

Preferably, the fat content of the composition is at least 30%, more preferably at least 35%. Preferably, the fat has a solid content at 30°C of no more than 7%.

Preferably, the heating is carried out at a temperature of about 100°C. If the heating is carried out under vacuum, preferably the heating is carried out at a pressure below about 120mbar, more preferably at a pressure below about 70mbar and even more preferably at a pressure below 50mbar.

The invention also provides a method of making a foodstuff comprising forming a first edible composition comprising a protein and at least 25% fat, the fat being liquid at body temperature and having a solids content at 20°C of no more than 35%, the first composition containing no water, forming a second edible composition, coextruding the second composition around the first composition to form a layer of the second composition on a core of the first composition and heating the extruded product so that the first composition forms a foam stable at body temperature and which liquefies under.

Preferably, the heating is carried out under vacuum. This causes the aerated first composition, and in preferred embodiments, the second composition, to expand further.

Preferably, the fat content of the first composition is at least 30%, more preferably at least 35%. Preferably, the fat has a solid content at 30°C of no more than 7%.

Preferably, the heating is carried out at a temperature of about 100°C. If the heating is carried out under vacuum, preferably the heating is carried out at a pressure of about 5mbar.

The extruded product may be cut into discrete lengths prior to the heating step.

The first and second compositions can be co-extruded prior to cooking and cooked together at temperatures well above the melting point of the fat. During cooking, the first and, if desired, the second composition expand to give the final product.

### Brief description of the drawings

The invention will now be described by way of example with reference to the drawings in which:
Figure 1 is a schematic elevation of a confectionery product according to a first embodiment of the invention;
Figure 2 is a schematic elevation of a confectionery product according to a second embodiment of the invention; and
Figure 3 is a cross sectional view along line III-III of Figure 1 or Figure 2.

### Detailed description of the invention:

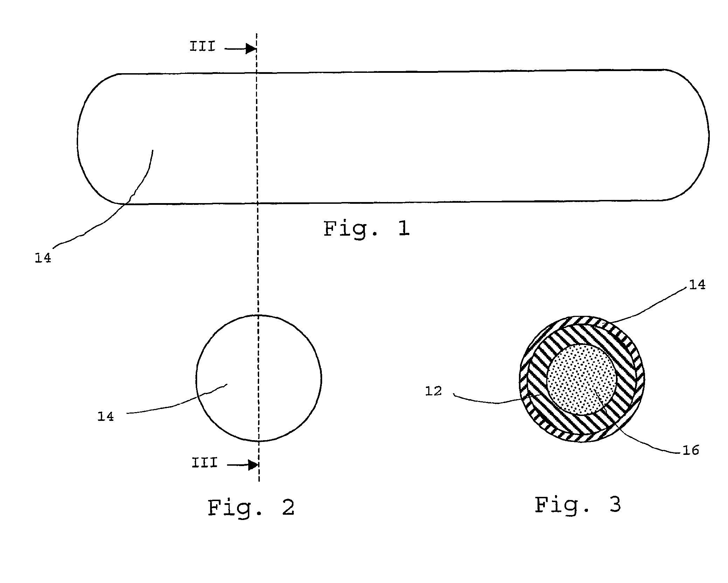

In the confectionery products shown in the figures a cylinder (Figure 1) or a generally spherical shell (Figure 2) 12 of an expanded confectionery. The cylinder or shell 12 may be made as described in WO-A-0237979, which describes the manufacture of malt flavoured expanded confectionery product having a thermoset sugar and protein matrix which is stable at body temperature. This cylinder or shell 12 is crunchy and, if eaten alone, has a rather dry mouth feel. In some configurations, such confectionery is adequately lubricated in the mouth by a chocolate coating; however, when in the form of a bar, an excessively thick layer of chocolate would be required. In the confectionery product 10 according to the second aspect of the invention, a central core 14 of a foamed composition according to the first aspect of the invention is provided in the cylinder or shell 12. In the embodiment of Figure 1, the core 14 is generally cylindrical and in the embodiment of Figure 2, generally spherical. The cylinder or shell 12 is coated in a chocolate coating 16.

The foamed composition of the core 14 is stable at body temperature, and the foam does not collapse during manufacture and storage of the confectionery products. When the confectionery products are eaten, the core 14 liquefies when it is subjected to shear, by being chewed and releases the fat component of the composition which is then available to lubricate the expanded confectionery layer 12.

It will be appreciated that the foamed composition of the invention can be used in many different types of confectionery product. It will also be appreciated that confectionery products according to the second aspect of the invention may be made in a wide variety of shapes and have coatings other than chocolate, or no coating at all.

### Examples

A confectionery product according to the invention can be made as follows.
1. The core composition:
For the foamed composition of the core, the following ingredients are mixed in a Hobart mixer with a paddle for 1 minute, the mixing vessel is scraped down and the mixture mixed for a further 30s:

| | |
|---|---|
| malted milk powder : | 59% |
| icing sugar : | 20% |
| Karlshamns Akoliq NT M fat : | 21% |
| | 100% |

The mixture is refined to give a milled powder of about 30µm particles.
The milled powder and other ingredients as follows are mixed in a Hobart mixer with a paddle for 30s, the mixing bowl is scraped down and the mixture mixed for a further 5s to give a creme:

| | |
|---|---|
| milled powder : | 71% |
| Karlshamns Akoliq NT M fat : | 23% |
| cocoa mass : | 6% |
| | 100% |

The resulting creme was held overnight at 18°C to firm up then whipped with a paddle in a Hobart mixer to aerate the creme to 0.94g/cm³ density.
2. For the outer honeycomb cylinder:
A semi plastic composition is made according to the following recipe:

| | |
|---|---|
| Skimmed milk powder : | 30% |
| Malt extract : | 20% |
| Spray dried glucose : | 50% |
| | 100% |

The water content (including water from the dry ingredients) is adjusted to 9% and the ingredients are mixed in a Z blade type mixer to form a semi plastic composition.
3. The creme and the semi plastic composition are coextruded through concentric dies to produce a continuous cylinder of the semi plastic composition filled with the creme, which is then cut to 14cm lengths by a guillotine. A rotary bar press is used for the coextrusion; the semi plastic composition and the creme are each forced through a manifold under pressure. The creme is worked at room temperature in this stage and the semi plastic composition is worked at between 40°C and 60°C to give a workable viscosity. The cylinder is extruded onto a takeoff belt running at between 110% and 120% of the speed of production of the cylinder to stretch the cylinder. The coextruder may have multiple concentric dies to extrude more than one cylinder.
4. The cut lengths of creme filled dough cylinder are introduced into a vacuum oven (Heraeus Instruments, Vacutherm model no. VT 6130 Laboratory vacuum oven) and baked for between 5 and 30 minutes at an oven temperature of 100°C at a pressure of 5mbar to 50mbar. The filled cylinder should achieve an internal temperature of between 40°C and 80°C.
The outer semi plastic composition and the inner aerated creme expand during vacuum baking to give an expanded cylinder around a foamed creme core.
5. The expanded product of step 4 is coated in chocolate by enrobing or moulding to give the final confectionery product.

In a preferred product according to the invention, the foamed core 16 constitutes about 20% by weight of the product, the expanded cylinder 12 constitutes about 25% by weight and the chocolate coating 14 about 55% by weight.

It will be readily appreciated that the foamed compositions of the invention can be incorporated in confectionery and other human and animal food products than that described above. In particular, the foamed compositions can be surrounded by other confectionery products than that described, and the shape of the product may be different from the elongate bar shape described; for example, they may be spherical. The composition of the invention can be used in foods other than confectionery and can be used in non-human foods, such as pet foods.

Preferred foamed compositions according to the invention contain at least 2%, more preferably from 4% to 6% protein. Preferably, the protein is a mixture of milk proteins.

Preferred foamed compositions according to the invention comprise no more than 40%, preferably between 30% to 40%, sugar. Preferably, the sugar is sucrose.

It will be seen that the invention provides a novel edible composition which can be used with advantage in confectionery and other human and animal food products. The foamed composition of the invention when incorporated into a confectionery or other food product liquefies only when chewed by a consumer; it does not liquefy under heat.

## Claims

1. A foamed edible composition stable at body temperature (37°C) that liquefies under shear comprising a protein and at least 25% fat, the fat being liquid at body temperature (37°C) and having a solids content at 20°C of no more than 35%, the composition containing no water.

2. A foamed edible composition according to claim 1 in which the fat has a solids content at 30°C of no more than 7%.

3. A confectionery product (10) comprising a foamed edible composition (16) according to claim 1 or 2 surrounded by rigid edible material (12).

4. A confectionery product (10) according to claim 3 in which the rigid edible material (12) is an expanded sugar and protein matrix.

5. A confectionery product (10) according to claim 3 or 4 having a chocolate outer layer (14).

6. A method of making a foamed edible composition stable at body temperature (37°C) and which liquefies under shear, the composition comprising a protein, a fat liquid at body temperature, and containing no water, the method comprising: forming a mixture of protein and at least 25% fat having a solids content at 20°C of no more than 35%, the mixture containing no water, aerating the mixture and heating the aerated mixture.

7. A method according to claim 6 in which the fat has a solids content at 30°C of no more than 7%.

8. A method according to claim 6 or 7 in which the aerated mixture is subjected to heat under vacuum.

9. A method of making a foodstuff comprising:
forming a first edible composition comprising a protein and at least 25% fat, the fat being liquid at body temperature (37°) and having a solids content at 20°C of no more than 35%, the first composition containing no water;
forming a second edible composition;
coextruding the second composition around the first composition to form a layer of the second composition on a core of the first composition; and
heating the extruded product so that the first composition forms a foam stable at body temperature and which liquefies under shear.

10. A method according to claim 9 in which the extruded product is heated under vacuum.

11. A method according to claim 9 or 10 in which the second composition expands during the step of heating the extruded product.

12. A method according to any of claims 9 to 11 in which the fat in the first composition has a solids content at 30°C of no more than 7%.

13. A method according to any of claims 9 to 12 in which the second composition forms a rigid edible material after the heating step.

14. A method according to claim 13 in which the second composition forms an expanded sugar and protein matrix after the heating step.

15. A method according to any of claims 9 to 14 further comprising coating the product of the heating step in an edible coating.

## Patentansprüche

1. Geschäumte essbare Zusammensetzung, bei Körpertemperatur (37°C) stabil, die sich unter Scherbeanspruchung verflüssigt, umfassend ein Protein und wenigstens 25 % Fett, wobei das Fett bei Körpertemperatur (37°C) flüssig ist und bei 20°C einen Feststoffanteil von höchstens 35 % hat, wobei die Zusammensetzung kein Wasser enthält.

2. Geschäumte essbare Zusammensetzung nach Anspruch 1, bei der das Fett bei 30°C einen Feststoffanteil von höchstens 7 % hat.

3. Süßwarenprodukt (10), das eine geschäumte essbare Zusammensetzung (16) nach Anspruch 1 oder Anspruch 2 umfasst, die von einem starren essbaren Material (12) umgeben ist.

4. Süßwarenprodukt (10) nach Anspruch 3, wobei das starre essbare Material (12) eine expandierte Zucker- und Proteinmatrix ist.

5. Süßwarenprodukt (10) nach Anspruch 3 oder 4, die eine Außenschicht aus Schokolade (14) hat.

6. Verfahren zum Herstellen einer geschäumten essbaren Zusammensetzung, die bei Körpertemperatur (37°C) stabil ist und die sich unter Scherbeanspruchung verflüssigt, wobei die Zusammensetzung ein Protein und ein bei Körpertemperatur flüssiges Fett aufweist und kein Wasser enthält, wobei das Verfahren Folgendes umfasst: Bilden eines Gemisches aus Protein und wenigstens 25 % Fett, das bei 20°C einen Feststoffanteil von höchstens 35 % hat, wobei das Gemisch kein Wasser enthält, Auflockern des Gemisches und Erhitzen des aufgelockerten Gemisches.

7. Verfahren nach Anspruch 6, wobei das Fett bei 30°C einen Feststoffanteil von höchstens 7 % hat.

8. Verfahren nach Anspruch 6 oder 7, wobei das aufgelockerte Gemisch unter Vakuum Wärme ausgesetzt wird.

9. Verfahren zum Herstellen eines Nahrungsmittels, das Folgendes aufweist:
Bilden einer ersten essbaren Zusammensetzung, die ein Protein und wenigstens 25 % Fett umfasst, wobei das Fett bei Körpertemperatur (37°C) flüssig ist und bei 20°C einen Feststoffanteil von höchstens 35 % hat, wobei die erste Zusammensetzung kein Wasser enthält,
Bilden einer zweiten essbaren Zusammensetzung,
Koextrudieren der zweiten Zusammensetzung um die erste Zusammensetzung herum, um eine Schicht der zweiten Zusammensetzung auf einem Kern der ersten Zusammensetzung zu bilden, und
Erhitzen des extrudierten Produkts, so dass die erste Zusammensetzung einen Schaum bildet, der bei Körpertemperatur stabil ist und sich unter Scherbeanspruchung verflüssigt.

10. Verfahren nach Anspruch 9, wobei das extrudierte Produkt unter Vakuum erhitzt wird.

11. Verfahren nach Anspruch 9 oder 10, wobei die zweite Zusammensetzung sich während des Schritts des Erhitzens des extrudierten Produktes ausdehnt.

12. Verfahren nach einem der Ansprüche 9 bis 11, wobei das Fett in der ersten Zusammensetzung bei 30°C einen Feststoffanteil von höchstens 7 % hat.

13. Verfahren nach einem der Ansprüche 9 bis 12, wobei die zweite Zusammensetzung nach dem Erhitzungsschritt ein starres essbares Material bildet.

14. Verfahren nach Anspruch 13, wobei die zweite Zusammensetzung nach dem Erhitzungsschritt eine expandierte Zucker- und Proteinmatrix bildet.

15. Verfahren nach einem der Ansprüche 9 bis 14, das ferner das Überziehen des Produkts des Erhitzungsschritts mit einem essbaren Überzug aufweist.

## Revendications

1. Composition de mousse comestible stable à la température corporelle (37°C) qui se liquéfie sous cisaillement comprenant une protéine et au moins 25% de matière grasse, la matière grasse étant liquide à la température corporelle (37°C) et ayant une teneur en solide à 20°C ne dépassant pas 35%, la composition ne contenant pas d'eau.

2. Composition de mousse comestible selon la revendication 1, dans laquelle la matière grasse a une teneur en solide à 30°C ne dépassant pas 7%.

3. Produit de confiserie (10) comprenant une composition de mousse comestible (16) selon la revendication 1 ou 2 entourée d'une substance comestible rigide (12).

4. Produit de confiserie (10) selon la revendication 3, dans lequel la substance comestible rigide (12) est une matrice expansée de sucre et de protéine.

5. Produit de confiserie (10) selon la revendication 3 ou 4, ayant une couche externe de chocolat (14).

6. Procédé de fabrication d'une composition de mousse comestible stable à la température corporelle (37°C) et qui se liquéfie sous cisaillement, la composition comprenant une protéine, un liquide gras à la température corporelle, et ne contenant pas d'eau, le procédé comprenant : la formation d'un mélange de protéine et d'au moins 25% de matière grasse ayant une teneur en solide à 20°C ne dépassant pas 35%, le mélange ne contenant pas d'eau, l'aération du mélange et le chauffage du mélange aéré.

7. Procédé selon la revendication 6, dans laquelle la matière grasse a une teneur en solide à 30°C ne dépassant pas 7%.

8. Procédé selon la revendication 6 ou 7, dans lequel le mélange aéré est soumis à une chaleur sous vide.

9. Procédé de fabrication d'un aliment comprenant :
la formation d'une première composition comestible comprenant une protéine et au moins 25% de matière grasse, la matière grasse étant liquide à la température corporelle (37°C) et ayant une teneur en solide à 20°C ne dépassant pas 35%, la première composition ne contenant pas d'eau ;
la formation d'une seconde composition comestible ;
la coextrusion de la seconde composition autour de la première composition pour former une couche de la seconde composition sur un coeur de la première composition ; et
le chauffage du produit extrudé de telle sorte que la première composition forme une mousse stable à la température corporelle et qui se liquéfie sous cisaillement.

10. Procédé selon la revendication 9, dans lequel le produit extrudé est chauffé sous vide.

11. Procédé selon la revendication 9 ou 10, dans lequel la seconde composition gonfle durant l'étape de chauffage du produit extrudé.

12. Procédé selon l'une quelconque des revendications précédentes 9 à 11, dans lequel la matière grasse dans la première composition a une teneur en solide à 30°C ne dépassant pas 7%.

13. Procédé selon l'une quelconque des revendications 9 à 12, dans lequel la seconde composition forme une substance comestible rigide après l'étape de chauffage.

14. Procédé selon la revendication 13, dans lequel la seconde composition forme une matrice expansée de sucre et de protéine après l'étape de chauffage.

15. Procédé selon l'une quelconque des revendications 9 à 14, comprenant en outre l'enrobage du produit de l'étape de chauffage dans un enrobage comestible.
